# EUROPÄISCHE PATENTSCHRIFT

(11) **EP 3 628 152 B1**
(45) Veröffentlichungstag und Bekanntmachung des Hinweises auf die Patenterteilung: **07.07.2021**
(21) Anmeldenummer: 19000424.2
(22) Anmeldetag: 23.09.2019
(51) Int. Cl.: A01K 47/02, A01K 51/00

(54) **FANGWABE ZUR BEKÄMPFUNG VON VARROAMILBEN**
HONEYCOMB FOR COMBATING VARROA MITES
STRUCTURE EN NIDS D'ABEILLES DE PIÉGEAGE DESTINÉE À LA LUTTE CONTRE LA VARROASE

(30) Priorität: 25.09.2018 DE 102018007615
(43) Veröffentlichungstag der Anmeldung: 01.04.2020
(73) Patentinhaber: Jenter, Karl-Heinz, 72660 Beuren (DE)
(72) Erfinder: Jenter, Karl-Heinz, 72660 Beuren (DE)
(74) Vertreter: Kohl, Karl-Heinz

(56) Entgegenhaltungen:
- EP-A2- 1 844 651
- DE-A1-102016 111 522
- GB-A- 2 265 811
- Api-Mo.Bru: "CAGE VAR-CONTROL - ENGLISH INSTRUCTIONS FOR USE Insertion of the cage", , 1. Januar 2018 (2018-01-01), XP055643377, Gefunden im Internet: URL:http://www.apimobru.com/wp/wp-content/ uploads/2019/02/Instructions-Var-control-C age-ENG2018.pdf [gefunden am 2019-11-18]
- Anonymous: "Varroabekämpfung mit Brutstopp-Verfahren Peter Mettler Präsident BZV March - PDF", , 1. Januar 2018 (2018-01-01), XP055643391, Gefunden im Internet: URL:https://docplayer.org/54601718-Varroab ekaempfung-mit-brutstopp-verfahren-peter-m ettler-praesident-bzv-march.html [gefunden am 2019-11-18]
- Anonymous: "Umsteckverfahren Jenter + JENTER VarroaSTOP", , 18. November 2019 (2019-11-18), XP055643408, Gefunden im Internet: URL:https://www.karl-jenter.eu/angebot [gefunden am 2019-11-18]

## Beschreibung

Die Erfindung betrifft eine Fangwabe zur Bekämpfung von Varroamilben nach dem Oberbegriff des Anspruches 1.

Bekannte Fangwaben haben ein dreiteiliges Gehäuse. Der eine als Deckel dienende Gehäuseteil ist mit schlitzförmigen Öffnungen versehen, die so gestaltet sind, dass die in der Fangwabe befindliche Königin aufgrund ihrer Körpergröße nicht durch die Öffnungen nach außen gelangen kann, Stockbienen dagegen passieren können. An den Gehäuseteil ist ein Rahmen angesetzt, in den ein Wabengitter eingebracht ist. Das Wabengitter dient der Königin zur Eiablage. An der anderen Seite des Rahmens wird eine geschlossene Rückwand befestigt. Ein Beispiel kann im Internet unter https:// docplayer.org/54601718-Varroabekaempfung-mit-brutstopp-verfahren-peter-mettler-praesident-bzv-march.html gesehen werden.

Die Stockbienen bauen auf dem als Mittelwand bezeichneten Wabengitter Waben auf. Die Varroamilben werden in die Fangwabe gelockt, weil sie sich in der Bienenbrut vermehren wollen. Nach einer bestimmten Zeit nach der Brutablage wird die Königin der Fangwabe entnommen und nach Abnehmen des Gehäusedeckels der Rahmen mit der Mittelwand aus dem Gehäuse herausgenommen. Die Herausnahme des Rahmens aus dem Gehäuse gestaltet sich häufig schwierig, weil die Bienen ihre Waben auch über den Rand des Rahmens hinausbauen, so dass er im Gehäuse verklebt. Anschließend wird die die Varroamilben enthaltende Mittelwand in bekannter Weise vernichtet. Danach kann der Rahmen wieder in das Gehäuse eingesetzt werden.

Aufgabe der Erfindung ist es, die Handhabung der Fangwabe zu vereinfachen.

Diese Aufgabe wird erfindungsgemäß bei einer gattungsgemäßen Fangwabe mit den kennzeichnenden Merkmalen nach Anspruch 1 gelöst.

Die erfindungsgemäße Fangwabe ist so ausgebildet, dass eine einfache Entnahme des von den Varroamilben und der Varroamilbenbrut befallenen Wabenstücks in der Fangwabe möglich ist. Dazu ist die Mittelwand auf der dem Käfiginnenraum zugewandten Innenseite der Rückwand angeordnet. Die Mittelwand dient als Grundlage für den Wabenaufbau der Bienen. Die Rückwand mit der Mittelwand kann einfach abgenommen und wieder montiert werden.

Die Mittelwand ist vorteilhaft eine gewalzte oder gegossene dünne Platte aus Bienenwachs mit einem vorgeprägten Relief in Form von gleichseitigen Sechsecken, die die Größe von Brutzellen einer natürlich gebauten Bienenwabe haben. Mittelwände werden in der Imkerei verwendet, um den Wabenbau der Bienen zu ordnen und zu beschleunigen.

Bei einer anderen Ausführungsform ist die Mittelwand einstückig mit der Rückwand ausgebildet, vorzugsweise durch eine Profilierung an der Innenseite der Rückwand gebildet. Auch in diesem Fall dient die Mittelwand als Grundlage für den Wabenbau.

Da die Rückwand abnehmbar am Käfig gehalten ist, lässt sie sich problemlos abnehmen. Dann kann die Mittelwand samt darauf aufgebautem Wabenstück leicht entnommen bzw. das aufgebaute Wabenstück entfernt werden. Die Rückwand des Käfigs lässt sich einfach abnehmen, beispielsweise sogar von Hand und ohne Hilfsmittel. Dadurch erleichtern sich auch die Reinigung der Rückwand und die Montage, um die Fangwabe für einen neuen Einsatz vorzubereiten.

Die Mittelwand kann an der Halterung manuell montierbar und demontierbar sein. Insbesondere eine Mittelwand mit darauf aufgebauten Waben kann dann ohne Hilfsmittel von Hand abgenommen und entsorgt werden. Anschließend wird lediglich eine neue Mittelwand an der Rückwand des Käfigs befestigt.

Vorteilhaft kann die Rückwand zumindest innenseitig ebenflächig ausgebildet sein. Sollten nach dem Einsatz der Fangwabe die Ränder der Mittelwand überbaut sein, lässt sich die Mittelwand manuell oder unter Zuhilfenahme einfacher Werkzeuge leicht von der Rückwand lösen. Neben einer einfacheren Handhabung lassen sich so auch eine zuverlässige Reinigung und damit die vielmalige Wiederverwendung der Rückwand sicherstellen.

In der einfachsten Form kann die Halterung der Mittelwand an der Rückwand in deren weitgehend ebenen und ungestörten Innenfläche bestehen, auf die sich die unter Wärme plastisch verformbare Mittelwand aufdrücken lässt und dadurch anhaftet. Vorzugsweise kann die Innenseite der Rückwand über eine Hafthilfe als Halterung der Mittelwand verfügen. Sie kann sich die plastische Verformbarkeit der Mittelwand insbesondere unter Wärme zur Befestigung zunutze machen. Dazu kann sie beispielsweise punktuelle, lineare, teil- oder vollflächige Strukturen aufweisen, die ein Anhaften der der Mittelwand begünstigen.

Alternativ oder zusätzlich kann die Rückwand über Befestigungsmittel verfügen, die die Mittelwand bei ihrer Montage perforieren, beispielsweise mit Spitzen versehene Stifte oder Dorne. Die Befestigungsmittel können die Mittelwand alleine oder zusätzlich zu ihrer Haftfähigkeit an der Rückwand befestigen. Damit bietet sich eine Vielzahl an Halterungen für die Mittelwand an der Rückwand.

Die Befestigungsmittel können vorzugsweise abnehmbar ausgebildet sein, um zum Beispiel einen umfangreicheren Reinigungsvorgang der Rückwand nicht zu behindern. Dazu können sie beispielsweise durch kurze Schrauben gebildet sein, die von einer Außenseite aus in die Rückwand geschraubt werden, so dass sie mit ihrem spitzen Ende von der Innenfläche der Rückwand abstehen.

Solcher Haft- und/oder Befestigungsmittel bedarf es nicht, wenn die Mittelwand einstückig mit der Rückwand ausgebildet ist.

Vorzugsweise kann die Fangwabe einen dreiteiligen Aufbau ihres Käfigs aus einem den Oberteil bildenden Deckel, einen rahmenförmigen Mittelteil und einer ebenflächigen Rückwand bieten. Der modulare Aufbau des Käfigs erleichtert seine Montage, seine Demontage, einen teilweisen Austausch bei Beschädigung und die einfachere Reinigung seiner Bestandteile.

Die regelmäßig schlitzförmigen Öffnungen für den Durchtritt von Arbeitsbienen durch eine Wandung des Käfigs befinden sich auf dessen Oberteil. Vorteilhafterweise kann der Käfig über Öffnungen auch an seinen anderen Seiten, insbesondere an seiner Rückseite verfügen. Die Arbeitsbienen sind damit nicht auf eine Zugangsrichtung zur Fangwabe von deren Oberseite aus beschränkt. Öffnungen in der Rückwand können darüber hinaus dazu genutzt werden, die Bienen an einem Überbauen der daran angebrachten Mittelwand über ihre Ränder hinweg zu hindern, indem die Öffnungen in der Rückwand knapp außerhalb der durch die Mittelwand bedeckten Fläche der Rückwand angebracht werden.

Alternativ oder zusätzlich können Öffnungen auch durch eine lücken- bzw. spaltbildende Montage der Bestandteile des Käfigs aneinander ausgebildet werden. So kann konstruktiv beispielsweise zwischen dem Deckel und dem Mittelteil ein Abstand das Passieren der Arbeitsbienen erlauben. Dies kann zusätzliche Zugangsmöglichkeiten für Arbeitsbienen schaffen, ohne dass die Bestandteile des Käfigs durch Öffnungen oder Durchbrüche konstruktiv geschwächt würden.

Der einfachen manuellen Handhabung der Fangwabe können Steckverbindungen zur Verbindung der Bestandteile des zerlegbaren Käfigs dienen. Sie können zusätzlich beispielsweise durch Schrauben reversibel deaktiviert werden, um ein versehentliches Lösen zu verhindern.

Nicht nur die Rückwand, sondern auch der Deckel kann ebenflächig ausgebildet und in gleicher Weise wie jener am Mittelteil zu montieren sein. Selbst wenn er einer geringeren Verschmutzung als die Rückwand unterliegt, lässt er sich damit ebenfalls leichter reinigen.

Vorzugsweise können die Rückwand und der Deckel im Wesentlichen identisch ausgebildet sein, also sowohl mit herkömmlichen Öffnungen als auch ggf. mit jenen im Randbereich außerhalb einer Anlagefläche der Mittelwand und mit Hafthilfen oder Befestigungsmitteln auf der Innenseite. Damit vereinfacht sich die Herstellung des Käfigs, weil dafür nur noch zwei unterschiedliche Teile produziert werden müssen, nämlich zwei identische Deckelteile und ein Mittelteil.

Die Fangwabe kann schließlich über eine verschließbare Öffnung vorzugsweise im Oberteil des Käfigs zum Einsetzen und zur Entnahme einer Königin verfügen. Sie kann das Einsetzen und das Entnehmen der Königin ohne ein Zerlegen des Käfigs ermöglichen, was dessen Handhabung erheblich erleichtert. Der Verschluss der Öffnung kann auch der einzige vom Käfig abnehmbare Bestandteil sein, wenn der Käfig für den nur einmaligen Gebrauch und daher im Übrigen unzerlegbar ausgebildet ist.

Der Anmeldungsgegenstand ergibt sich nicht nur aus dem Gegenstand der einzelnen Patentansprüche, sondern auch durch alle in den Zeichnungen und der Beschreibung offenbarten Angaben und Merkmale. Sie werden, auch wenn sie nicht Gegenstand der Ansprüche sind, als erfindungswesentlich beansprucht, soweit sie einzeln oder in Kombination gegenüber dem Stand der Technik neu sind.

Weitere Merkmale der Erfindung ergeben sich aus den Ansprüchen, der Beschreibung und der Zeichnung.

Die Erfindung wird anhand zweier in den Zeichnungen dargestellter Ausführungsbeispiele näher erläutert. Es zeigen
- Figur 1: zwei Explosionsansichten einer erfindungsgemäßen Fangwabe,
- Figur 2: eine in ein Rähmchen eingesetzte Fangwabe von einer erfindungsgemäßen Oberseite aus,
- Figur 3: die eingesetzte Fangwabe von einer Unterseite aus,
- Figur 4 und Fig. 5: eine zweite Ausführungsform einer Rückwand der erfindungsgemäßen Fangwabe in perspektivischer Unter- und Draufsicht.

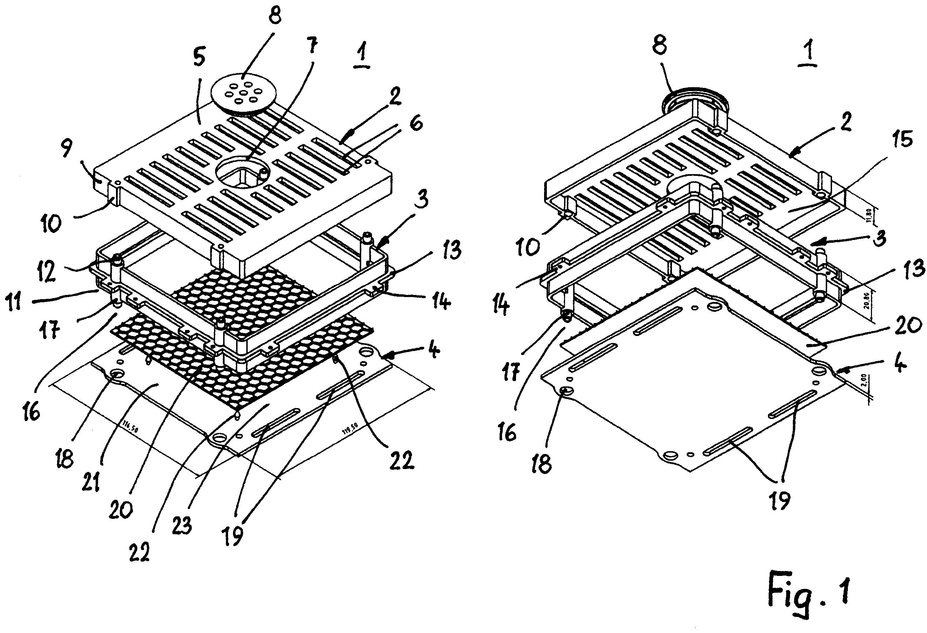

Der Aufbau der Fangwabe 1 zeigt sich in der Figur 1 in zwei Explosionsdarstellungen, links in einer Schrägdraufsicht und rechts in einer Schräguntersicht. Die Fangwabe 1 besteht aus einem im Wesentlichen dreiteiligen Käfig, nämlich aus einem Deckel 2, einem rahmenförmigen Mittelteil bzw. Rahmen 3 und einer ebenflächigen Rückwand 4. Der Deckel 2 weist auf seiner ebenflächigen Oberseite 5 in zwei nebeneinander liegenden Reihen übereinander angeordnete schlitzförmige Öffnungen 6 auf, deren Abmessungen ein Passieren von Arbeits- bzw. Stockbienen zulässt, ein Passieren einer Königin dagegen nicht. Diese lässt sich durch eine kreisrunde Öffnung 7 in die Fangwabe 1 einsetzen oder aus ihr entnehmen. Die kreisrunde Öffnung 7 ist durch einen Verschluss 8 manuell und werkzeuglos verschließbar.

Den Umfang des Deckels 2 umzieht ein einseitig rechtwinklig abstehender und rahmenförmiger Rand 9, in den vier einander gegenüberliegende Buchsen 10 einer Steckverbindung 11 integriert sind. Die Buchsen 10 wirken mit vier Steckern 12 der Steckverbindung 11 zusammen, die vom Rahmen 3 abstehen. Die Abmessungen des Rahmens 3 in Umfangsrichtung entsprechen denjenigen des Randes 9, so dass der Rahmen 3 und der Rand 9 zusammen vier Außenwände des Käfigs bilden, die rechtwinklig zur Oberseite 5 und zur Rückwand 4 der Fangwabe 1 verlaufen. Die Steckverbindung 11 aus den Buchsen 10 und den Steckern 12 kann außerdem derart gestaltet sein, dass zwischen dem Rand 9 und dem Rahmen 3 im montierten Zustand ein Spalt verbleibt, der ein Passieren von Arbeitsbienen erlaubt.

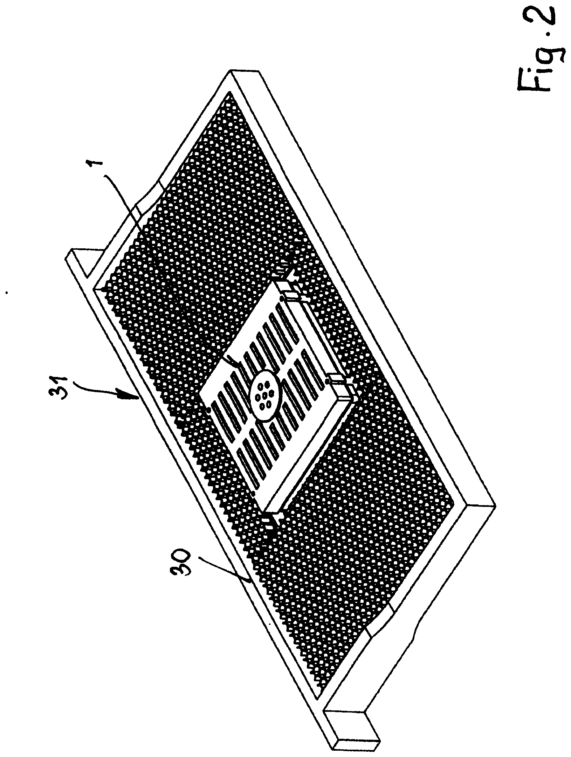

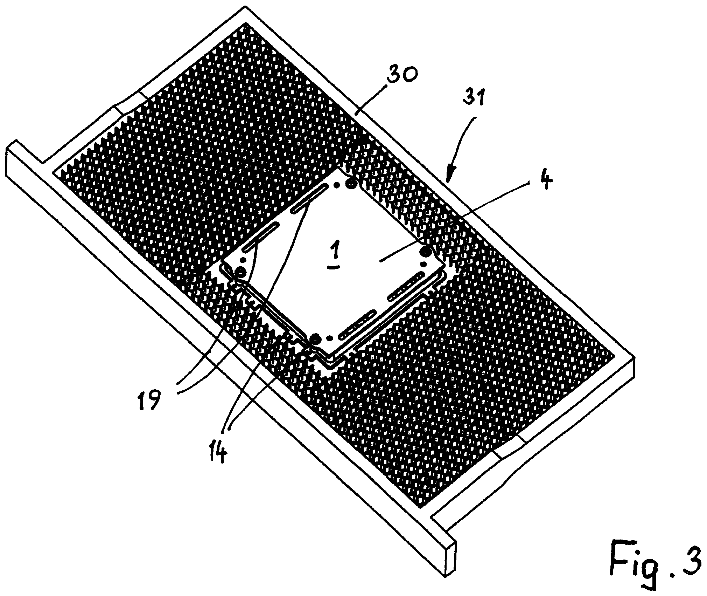

An der Außenseite des Rahmens 3 ist eine in Umfangsrichtung umlaufende Rippe 13 angebracht, von der durchbohrte Laschen 14 abstehen. Sie dienen der Befestigung der Fangwabe 1 in einem Rähmchen bzw. in einer Bienenwabe einer Bienenbeute (vgl. Figuren 2, 3).

Den unteren Abschluss der Fangwabe 1 bildet die ebenflächige Rückwand 4. Sie ergänzt den Deckel 2 und den Rahmen 3 zu einem quaderförmigen Käfig, der einen Käfiginnenraum 15 umschließt. Auch die Rückwand 4 ist über eine Steckverbindung 16 am Rahmen 3 befestigt. Sie besteht aus vier den Steckern 12 axial gegenüberliegenden Steckern 17, die zur Montage in kreisrunde Durchbrüche 18 in einem Randbereich der Rückwand 4 eingreifen. Die Rückwand 4 enthält an ihrem Rand außerdem paarweise einander gegenüberliegende schlitzförmige Öffnungen 19 in weitgehend denselben Abmessungen wie die oberseitigen Öffnungen 6 für einen Durchgang von Arbeitsbienen auch von der Rückseite der Fangwabe 1 aus.

Die übrige, weitgehend geschlossene Fläche der Rückwand 4 dient als Halterung für eine passend zugeschnittene Mittelwand 20. Damit die plastische verformbare Mittelwand 20 aus Wachs an der dem Käfiginnenraum 15 zugewandten Innenseite 21 der Rückwand 4 dauerhaft anhaftet, stehen kurze spitze Stifte 22 von der Innenseite 21 ab. Beim Aufdrücken der Mittelwand 20 auf die Innenseite 21 durchstoßen sie die weiche Mittelwand 20 und halten sie fest, so dass ihre freie Fläche 23 in den Käfiginnenraum 15 hinein weist. Umgekehrt erlauben die Stifte 22 eine bequeme manuelle Abnahme der Mittelwand 20 von der Rückwand 4 ohne Hilfsmittel.

Zur Vorbereitung der Fangwabe 1 wird zunächst eine passend zugeschnittene Mittelwand 20 auf der Innenseite 21 der Rückwand 4 befestigt. Anschließend werden die Rückwand 4 per Steckverbindung 16 am Rahmen 3 und der Rahmen 3 per Steckverbindung 11 am Deckel 2 befestigt. Damit ist die Fangwabe 1 einsatzbereit.

Eine Königin wird durch die kreisrunde Öffnung 7 eingesetzt und die Öffnung 7 mit dem Verschluss 8 verschlossen. Während die Königin nun im Käfiginnenraum 15 eingeschlossen ist, können Arbeitsbienen, aber auch Varroamilben durch die Öffnungen 6, 19 in die Fangwabe 1 gelangen. Die Arbeitsbienen versorgen dort die Königin und nehmen den Wabenbau vor. Er geschieht einseitig auf der freien Fläche 22 der Mittelwand 20, die eine Sechseck-Waben-Struktur aufweist, die als Grundlage für den Wabenbau der Bienen dient.

Die in der Fangwabe eingesperrte Bienenkönigin lockt die Varroamilben aus der Bienenwabe 31 (Fig. 2 und 3) an, die ihre Eier in der Fangwabe ablegen. Die Bienenwabe 31 bleibt dadurch weitgehend von der Varroamilbe verschont.

Nach Abschluss des Wabenbaus und Verschließen der Wabenzellen mit einem Wachsdeckel lässt sich die Königin durch die kreisrunde Öffnung 7 hindurch entnehmen. Das mit Varroamilben bzw. der Varroamilbenbrut belastete Wabenstück auf der Mittelwand 20 kann nun durch Abnahme der Rückwand 4 der Fangwabe 1 entnommen werden. Die Mittelwand 20 lässt sich grundsätzlich genauso leicht von der Rückwand 4 demontieren wie montieren. Die Öffnungen 19 neben der Mittelwand 20 sorgen zudem dafür, dass die Bienen die Mittelwand 20 jedenfalls an diesen beiden Seiten nicht mit Waben überbauen, was eine Reinigung der Rückwand 4 erschweren würde. Die Ebenflächigkeit der Rückwand 4 erleichtert ihre Reinigung ebenso wie der Umstand, dass sie insbesondere keinen umfangsseitigen Rahmen aufweist. Das belastete Wabenstück lässt sich folglich bequem von der Rückwand 4 abnehmen und vernichten.

Da die Mittelwand 20 an der dünnen, plattenförmigen Rückwand 4 befestigt ist, muss zum Entfernen der Mittelwand 20 nicht die gesamte Fangwabe 1 auseinander genommen werden. Es muss nur die flache Rückwand 4 abgenommen werden, was einfach möglich ist.

Nach einer Reinigung zumindest der Rückwand 4 von eventuellen Rückständen aus dem Wabenbau ist sie, mit einer neuen Mittelwand 20 bestückt, für einen weiteren Einsatz in der Fangwabe 1 bereit. Durch das beschriebene Verfahren ist es möglich, die Varroamilben wirksam zu bekämpfen. Da sie aus der Bienenwabe 31 in die Fangwabe 1 angelockt werden, können sie dort zusammen mit der Varroamilbenbrut in der beschriebenen Weise wirkungsvoll entfernt und getötet werden.

Die Figuren 2 und 3 zeigen eine Montageposition der Fangwabe 1 in einem Rahmen 30 einer Bienenwabe 31. Die Fangwabe 1 hat beispielhaft einen weitgehend quadratischen Deckel 2 bzw. Rückwand 4. Ihre Höhe, nämlich der Abstand des Deckels 2 von der Rückwand 4, ist so bemessen, dass die Fangwabe 1 nicht dicker ist als die Bienenwabe 31. Der Einsatz einer Fangwabe 1 erfordert also keine Entnahme benachbarter Rahmen im Bienenstock. An den Laschen 14 (Fig. 1 und 3) ist die Fangwabe 1 in der Ebene einer Mittelwand der Bienenwabe 31 befestigt. Sie bzw. insbesondere ihr Deckel 2 ist aus vorteilhaft weitgehend transparentem Kunststoff gefertigt, damit der Imker den Fortschritt der Aktivitäten der Bienen in der Fangwabe 1 optisch verfolgen kann. Die Montage der Fangwabe 1 in einer Bienenwabe 31 erlaubt einen weitgehend unveränderten Aufbau und eine unveränderte Handhabung der Bienenbeute bei Einsatz der Fangwabe 1.

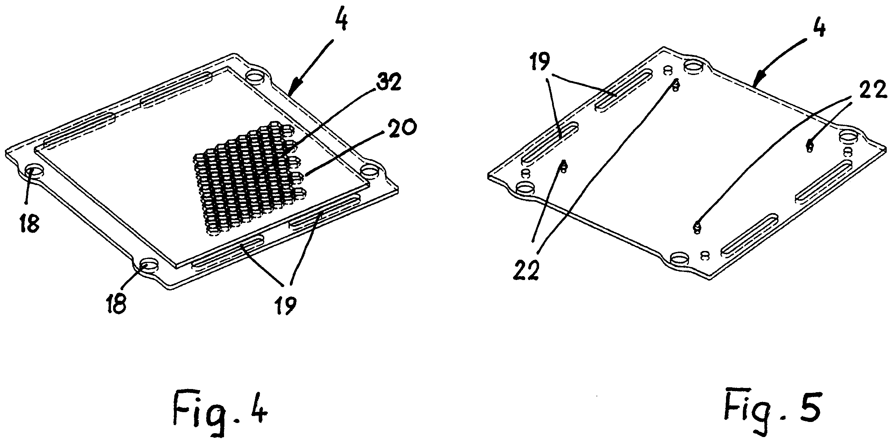

Die Fig. 4 und 5 zeigen eine Rückwand 4, bei der die Wabenstruktur 32 an der Innenseite der Rückwand 4 ausgebildet ist. Im Unterschied zur vorigen Ausführungsform muss daher keine zusätzliche Mittellage auf der Rückwand 4 befestigt werden. Die Rückwand 4 wird zusammen mit der Wabenstruktur 32 vorteilhaft in einem Spritzgießvorgang aus einem entsprechenden Kunststoff hergestellt.

Im Übrigen ist die Rückwand 4 gleich ausgebildet wie beim vorigen Ausführungsbeispiel. Die Arbeiterbienen können daher aufbauend auf diese Wabenstruktur ihre Waben innerhalb der Fangwabe 1 bauen.

Die einstückig mit der Rückwand 4 ausgebildete Wabenstruktur 32 kann in vorteilhafter Weise mit einer dünnen Wachsschicht bezogen werden, was den Arbeitsbienen den Aufbau der Waben erleichtert.

Die Fangwabe 1 wird bei beiden Ausführungsformen erst dann geöffnet, wenn die Varroamilben aus den in der Fangwabe abgelegten Eiern geschlüpft sind. Während bei der vorigen Ausführungsform die Mittelwand 20 abgenommen und vernichtet wird, wird bei der Ausführungsform nach den Fig. 4 und 5 die von den Arbeiterbienen aufgebrachte Wabenstruktur vom Imker entfernt, beispielsweise mit einem entsprechenden Werkzeug abgeschabt bzw. abgeschnitten oder geköpft. Nach vollständiger Reinigung wird die Rückwand 4 wieder am Rahmen 3 befestigt und die Fangwabe 1 in die Bienenwabe 31 eingesetzt.

## Patentansprüche

1. Fangwabe zur Bekämpfung von Varroamilben in Bienenbehausungen
- mit einem vorzugsweise zerlegbaren Käfig (2, 3, 4) für eine Bienenkönigin,
- mit Öffnungen (6) vorzugsweise in einem Oberteil (5) des Käfigs (2, 3, 4) zum Durchtritt von Arbeits- bzw. Stockbienen,
- mit einer Mittelwand (20), und
- mit Koppelungsvorrichtungen (14) am Käfig (2, 3, 4) zur Befestigung des Käfigs (2, 3, 4) in einer Bienenwabe (31),
**dadurch gekennzeichnet, dass**
die Mittelwand (20) auf einer dem Käfiginnenraum (15) zugewandten Innenseite (21) einer dem Oberteil (5) gegenüberliegenden Rückwand (4) des Käfigs (2, 3, 4) angeordnet ist, die abnehmbar am Käfig (2, 3, 4) gehalten ist.

2. Fangwabe nach Anspruch 1, **dadurch gekennzeichnet, dass** die Mittelwand (20) an einer Halterung (22) manuell montierbar und demontierbar ist.

3. Fangwabe nach Anspruch 1 oder 2, **dadurch gekennzeichnet, dass** die Innenseite (21) der Rückwand (4) eben ist.

4. Fangwabe nach einem der Ansprüche 1 bis 3, **dadurch gekennzeichnet, dass** an der Innenseite (21) der Rückwand (4) eine Hafthilfe als Halterung (22) für die Mittelwand (20) vorgesehen ist.

5. Fangwabe nach einem der Ansprüche 1 bis 4, **dadurch gekennzeichnet, dass** an der Innenseite (21) der Rückwand (4) Befestigungsmittel als Halterung für die Mittelwand (20) vorgesehen sind.

6. Fangwabe nach einem der Ansprüche 1 bis 5, **dadurch gekennzeichnet, dass** die Mittelwand (20) einstückig mit der Rückwand (4) ausgebildet ist.

7. Fangwabe nach einem der Ansprüche 1 bis 6, **dadurch gekennzeichnet, dass** die Mittelwand (20) durch eine Profilierung an der Innenseite (21) der Rückwand (4) gebildet ist.

8. Fangwabe nach einem der Ansprüche 1 bis 7, **dadurch gekennzeichnet, dass** der Käfig aus einem den Oberteil (5) bildenden Deckel (2), einem rahmenförmigen Mittelteil (3) und einer ebenflächigen Rückwand (4) besteht.

9. Fangwabe nach einem der Ansprüche 1 bis 8, **dadurch gekennzeichnet, dass** die Rückwand (4) im Bereich außerhalb der Mittelwand (20) wenigstens eine Öffnung (19) zum Durchtritt von Arbeitsbienen aufweist.

10. Fangwabe nach einem der Ansprüche 1 bis 9, **dadurch gekennzeichnet, dass** Steckverbindungen (11; 16) zur Verbindung der Bestandteile des zerlegbaren Käfigs (2, 3, 4) vorgesehen sind.

11. Fangwabe nach einem der Ansprüche 1 bis 10, **dadurch gekennzeichnet, dass** der Oberteil (2) eben ist.

12. Fangwabe nach einem der Ansprüche 1 bis 11, **dadurch gekennzeichnet, dass** der Oberteil (2) eine verschließbare Öffnung (7) zum Einsetzen und zur Entnahme einer Bienenkönigin aufweist.

## Claims

1. Honeycomb for combating Varroa mites in bee colonies,
- with a preferably dismantable cage (2, 3, 4) for a queen bee,
- with openings (6), preferably in a top portion (5) of the cage (2, 3, 4) for the passage of worker bees or drones,
- with a central wall (20), and
- with coupling devices (14) on the cage (2, 3, 4) for securing the cage (2, 3, 4) in a honeycomb (31),
**characterized in that**
the central wall (20) is disposed on an inner side (21), which faces the inner chamber (15) of the cage, of a back wall (4) of the cage (2, 3, 4) opposite to the top portion (5) and is removably retained on the cage (2, 3, 4).

2. Honeycomb according to claim 1,
**characterized in that** the central wall (20) can be manually mounted on and detached from a mount (22).

3. Honeycomb according to claim 1 or 2,
**characterized in that** the inner side (21) of the back wall (4) is flat.

4. Honeycomb according to one of claims 1 to 3,
**characterized in that** the inner side (21) of the back wall (4) is provided with an adhesion support as the mount (22) for the central wall (20).

5. Honeycomb according to one of claims 1 to 4,
**characterized in that** securing means are provided on the inner side (21) of the back wall (4) as the mount for the central wall (20).

6. Honeycomb according to one of claims 1 to 5,
**characterized in that** the central wall (20) is formed as one piece with the back wall (4).

7. Honeycomb according to one of claims 1 to 6,
**characterized in that** the central wall (20) is formed on the inner side (21) of the back wall (4) by means of profiling.

8. Honeycomb according to one of claims 1 to 7,
**characterized in that** the cage consists of a cover (2) forming the top portion (5), a frame-shaped central portion (3) and a planar back wall (4).

9. Honeycomb according to one of claims 1 to 8,
**characterized in that** in the region beyond the central wall (20), the back wall (4) has at least one opening (19) for the passage of worker bees.

10. Honeycomb according to one of claims 1 to 9,
**characterized in that** push-in connections (11; 16) are provided for connecting the components of the cage (2, 3, 4) which can be dismantled.

11. Honeycomb according to one of claims 1 to 10,
**characterized in that** the top portion (2) is flat.

12. Honeycomb according to one of claims 1 to 11,
**characterized in that** the top portion (2) has a closable opening (7) for inserting and for removing a queen bee.

## Revendications

1. Structure en nids d'abeilles de piégeage destinée à la lutte contre la varroase dans les abris des colonies d'abeilles,
- pourvue d'une cage (2, 3, 4) démontable de préférence pour une reine des abeilles,
- pourvue d'orifices (6), de préférence dans une partie supérieure (5) de la cage (2, 3, 4), pour laisser le passage à des abeilles ouvrières ou à des abeilles de ruche,
- pourvue d'une paroi centrale (20), et
- pourvue de dispositifs de couplage (14) sur la cage (2, 3, 4), destinés à fixer la cage (2, 3, 4) dans un nid d'abeilles (31),
**caractérisée en ce que**
la paroi centrale (20) est placée sur une face intérieure (21) dirigée vers l'intérieur de la cage (15) d'une paroi arrière (4) de la cage (2, 3, 4) opposée à la partie supérieure (5), qui est maintenue de manière amovible sur la cage (2, 3, 4).

2. Structure selon la revendication 1, **caractérisée en ce que** la paroi centrale (20) est susceptible d'être montée et démontée manuellement sur ou d'un support (22).

3. Structure selon la revendication 1 ou 2, **caractérisée en ce que** la face intérieure (21) de la paroi arrière (4) est plane.

4. Structure selon l'une quelconque des revendications 1 à 3,
**caractérisée en ce que** sur la face intérieure (21) de la paroi arrière (4), un auxiliaire d'adhérence est prévu en tant que support (22) pour la paroi centrale (20).

5. Structure selon l'une quelconque des revendications 1 à 4,
**caractérisée en ce que** sur la face intérieure (21) de la paroi arrière (4), des moyens de fixation sont prévus en tant que support pour la paroi centrale (20).

6. Structure selon l'une quelconque des revendications 1 à 5,
**caractérisée en ce que** la paroi centrale (20) est conçue d'un seul tenant avec la paroi arrière (4).

7. Structure selon l'une quelconque des revendications 1 à 6,
**caractérisée en ce que** la paroi centrale (20) est formée par un profilage sur la face intérieure (21) de la paroi arrière (4).

8. Structure selon l'une quelconque des revendications 1 à 7,
**caractérisée en ce que** la cage est constituée d'un couvercle (2) formant la partie supérieure (5), d'une pièce centrale (3) en forme de cadre et d'une paroi arrière (4) à surface plane.

9. Structure selon l'une quelconque des revendications 1 à 8,
**caractérisée en ce que** dans la zone extérieure à la paroi centrale (20), la paroi arrière (4) comporte au moins un orifice (19) pour laisser le passage à des abeilles ouvrières.

10. Structure selon l'une quelconque des revendications 1 à 9,
**caractérisée en ce que** des assemblages enfichables (11 ; 16) sont prévus pour assembler les éléments constitutifs de la cage (2, 3, 4) démontable.

11. Structure selon l'une quelconque des revendications 1 à 10,
**caractérisée en ce que** la partie supérieure (2) est plane.

12. Structure selon l'une quelconque des revendications 1 à 11,
**caractérisée en ce que** la partie supérieure (2) comporte un orifice (7) fermable, pour y insérer et en retirer une reine des abeilles.
